# EUROPÄISCHE PATENTSCHRIFT

(11) **EP 1 665 132 B1**
(45) Veröffentlichungstag und Bekanntmachung des Hinweises auf die Patenterteilung: **08.10.2008**
(21) Anmeldenummer: 04786219.8
(22) Anmeldetag: 26.08.2004
(51) Int. Cl.: G06K 9/20, G06K 9/03

(54) **VERFAHREN UND SYSTEM ZUM ERFASSEN VON DATEN AUS MEHREREN MASCHINELL LESBAREN DOKUMENTEN**
METHOD AND SYSTEM FOR COLLECTING DATA FROM A PLURALITY OF MACHINE READABLE DOCUMENTS
PROCEDE ET SYSTEME DE DETECTION DE DONNEES PROVENANT DE PLUSIEURS DOCUMENTS LISIBLES PAR ORDINATEUR

(30) Priorität: 15.09.2003 DE 10342594
(43) Veröffentlichungstag der Anmeldung: 07.06.2006
(73) Patentinhaber: Captaris Document Technologies GmbH, 78467 Konstanz (DE)
(72) Erfinder: SCHIEHLEN, Matthias, 78465 Konstanz (DE)
(74) Vertreter: Schaumburg, Thoenes, Thurn, Landskron
(86) Internationale Anmeldenummer: PCT/EP2004/009538
(87) Internationale Veröffentlichungsnummer: WO 2005/029392

(56) Entgegenhaltungen:
- WO-A-98/47098
- US-A- 4 933 979
- US-A- 5 140 650
- US-A- 6 028 970
- US-A1- 2002 141 660
- CASEY R G ET AL: "INTELLIGENT FORMS PROCESSING" IBM SYSTEMS JOURNAL, IBM CORP. ARMONK, NEW YORK, US, Bd. 29, Nr. 3, Januar 1990 (1990-01), Seiten 435-450, XP000265375 ISSN: 0018-8670
- PATENT ABSTRACTS OF JAPAN Bd. 1997, Nr. 07, 31. Juli 1997 (1997-07-31) & JP 09 062758 A (OKI ELECTRIC IND CO LTD), 7. März 1997 (1997-03-07)

## Beschreibung

Die Erfindung betrifft ein Verfahren und ein System zum Erfassen von Daten aus mehreren maschinell lesbaren Dokumenten.

Derartige Verfahren und Systeme sind bekannt. Üblicherweise weisen die Systeme einen Scanner auf, mit welchem Vorlagen optisch abgetastet werden. Die hierbei erzeugten Dateien sind maschinell lesbare Dokumente und enthalten in der Regel Textelemente. Die Textelemente werden mit Hilfe einer OCR-Einrichtung in codierten Text umgesetzt. Den Dateien werden in der Regel vorbestimmte Formulare bzw. Templates zugeordnet, so dass anhand der Formulare gezielt bestimmte Informationen aus den Text enthaltenden Dateien ermittelt werden können. Diese Informationen werden zum Beispiel in einer Datenbank abgespeichert.

Derartige Verfahren und Systeme werden beispielsweise bei großen Firmen eingesetzt, um Rechnungen zu lesen. Die so extrahierten Daten können automatisch einer betriebswirtschaftlichen Software übermittelt werden.

Ein solches System ist beispielsweise in der US 4,933,979 beschrieben. Dieses System weist einen Scanner zum optischen Abtasten von Formularen auf. Bei diesem System können eine Vielzahl von Formulartypen definiert werden, wobei jeder Formulartyp bzw. Template durch mehrere Parameter, insbesondere geometrisch definierte Bereichen, in welchen Texte oder Bilder enthalten sein sollen, festgelegt ist. Die Formulartypen können auch durch weitere Eigenschaften, wie zum Beispiel der Schrift, die in den Texten enthalten ist (Alphabet, Zahlen, Symbole, Katakana, Kanji, Handschrift) definiert sein. Nach dem Scannen eines Formulars wird mittels einer Formulartypunterscheidungseinrichtung dem gescannten Formular ein Template zugeordnet. Dementsprechend werden die in dem Textfeld enthaltenen Daten mittels einer OCR-Einrichtung gelesen und extrahiert. Falls kein geeignetes Template vorhanden ist, muss eines erstellt werden. Dies ist aufwändig. Hierzu ist Personal notwendig, das speziell für dieses System ausgebildet sein muss und zumindest Grundkenntnisse der Computer- und Softwaretechnik haben muss.

Aus der WO 98/47098 geht ein weiteres System zum automatischen Erfassen von Daten aus maschinell lesbaren Dokumenten hervor. Hierbei werden mittels eines Scanners Formulare optisch abgetastet. Danach wird automatisch eine Linien-Karte des Formulars erstellt. Hierbei werden zum einen alle Linien erfasst als auch grafische Elemente in eine Linienstruktur umgesetzt. Andere Elemente, wie zum Beispiel Textabschnitte, werden ausgefiltert. Alle vertikalen Linien bilden die Grundlage zur Erstellung eines vertikalen Schlüssels und alle horizontalen Linien bilden die Grundlage zur Erstellung eines horizontalen Schlüssels. Danach wird ermittelt, ob bereits ein Template mit einem korrespondierenden vertikalen und horizontalen Schlüssel vorhanden ist. Falls dies der Fall ist, werden die Daten mit einem entsprechenden Template ausgelesen. Ist dies nicht der Fall, so wird anhand des eingescannten Formulars mittels eines Selbstlern-Modus ein Template erstellt und abgespeichert. Der Benutzer kann hierbei die Erstellung des Templates manuell unterstützen. Auch hier sollte der Benutzer bei der Templateerstellung gute Kenntnisse von diesem System, insbesondere dessen Softwarestruktur besitzen, damit für den Betrieb geeignete Templates erstellt werden.

In dem Buch Modern Information Retrieval von Baeza-Yates und Ribeiro-Neto, Eddison-Wessley Verlag, ISBN 0-201-39829-X sind die Grundlagen von Datenbanken und zum schnellen Wiederauffinden von in Datenbanken gespeicherten Informationen erläutert. So ist im Kapitel 8.2 ein Verfahren mit invertierten Dateien, das auch als invertierter Index bezeichnet wird, beschrieben. Bei diesem Verfahren wird aus einem zu untersuchenden Text zunächst ein Wörterbuch mit allen im Text enthaltenen Wörtern erstellt. Allen Wörtern des Wörterbuches werden eine oder mehrere Zahlen zugeordnet, die angeben, an welcher Stelle das Wort im Text auftritt. Derartige invertierte Dateien erlauben eine schnellere automatische Analyse eines zu durchsuchenden Textes. Im Kapitel 8.6.1 ist ein String Matching-Verfahren beschrieben, mit welchem zwei Strings verglichen werden und ein zur Ähnlichkeit der Strings indirekt proportionales Kostenmaß berechnet wird. Wenn die beiden Strings identisch sind, ist der Betrag des Kostenmaßes Null. Je stärker sich die Strings unterscheiden, desto größer ist der Betrag des Kostenmaßes. Das Kostenmaß ist somit ein Ausdruck für die Ähnlichkeit der beiden Strings. Dieses und ähnliche Verfahren sind auch unter den Bezeichnungen Approximate String Matching, Levenshtein-Verfahren, Elastic Matching und Viterbi-Algorythmus bekannt. Diese Verfahren gehören zu dem Gebiet der dynamischen Programmierung.

Aus der CASEY R.G. et al: "Intelligent Forms Processing", IBM Systems Journal, IBM Corp., USA, Band 29, Nr. 3, Januar 1990, Seite 435 bis 450, XP000265375, ISSN: 0018-8670 geht ein Verfahren zum Extrahieren von Datenfeldern aus gescannten Vorlagen hervor. Dieses Verfahren zeichnet sich dadurch aus, dass Hintergrundlinien und dergleichen extrahiert werden können. Bevor Formulare mit diesem Verfahren bearbeitet werden können, müssen für jeden Formulartyp Modelle erzeugt werden. Solch ein Modell eines Formulartyps besteht aus Formularmustern und einer Beschreibung für jedes Feld, das in dem Formular enthalten ist. Ein Formularmuster ist ein Satz von Merkmalen, die zum Unterscheiden eines Formulartyps von einem anderen Formulartyp verwendet werden. Die Feldbeschreibungen umfassen den Ort des Feldes in dem Formular. Hier sind unterschiedliche Methoden offenbart, wie die Formulare erkannt werden können. Falls ein Formular erkannt wird, werden auch Informationen erzeugt, die angeben, inwieweit die Position zwischen dem Formularmodell und dem erfassten Formular über einstimmt, wobei dabei entsprechende Abweichungen korrigiert werden können.

Aus Patent Abstract of Japan Band 1997, Nr. 07, 31. Juli 1997 (JP 9 062758 A) geht ein System zum Erkennen von Formularen hervor, bei welchen Formulare, die nicht vollständig erkannt werden, direkt in einer Bilddatei gespeichert werden. Diese als Bilddatei gespeicherten, nicht erkennbaren Formulare, können dann "en bloc" manuell bearbeiten werden.

Die US 5,140,650 A offenbart ein Verfahren und ein System zum optischen Erkennen von Buchstaben (OCR-Vorrichtung) bei welcher zunächst ein leeres Master-Formular gescannt wird und das entsprechende digitale Bild gespeichert wird. Dieses eingescannte Bild wird verwendet, um eine Vorlage zu erzeugen, damit später entsprechende Formulare automatisch gelesen und extrahiert werden können.

Aus der US 4,933,979 geht eine Vorrichtung zum automatischen Lesen von Daten aus Formularen hervor, die eine Scanneinrichtung zum optischen Abtasten der Formulare zum Ausgeben von Bilddaten, sowie eine Speichereinrichtung zum Speichern der Informationen aufweist. Es ist auch eine Leseeinrichtung vorgesehen, mit welchen aus den Bilddaten die Bereiche der Formulare in Abhängigkeit von Formularinformationen eines Modellformulars ausgelesen werden. Die Informationen des Modellformulars werden durch Abtasten eines Modellformulars erzeugt, wobei das digitale Abbild an einem Bildschirm dargestellt wird, an dem ein Benutzer die Lesebedingungen für einen jeden Lesebereich festlegen kann. Dieser Registrierungsprozess der Formularinformationen wird für ein jeden Formulartyp ausgeführt, der dann später gelesen werden soll.

Aus der US 5,317,646 geht ein Vorlagenerkennungssystem hervor, das den Bediener in der Erstellung elektronischer Vorlagen unterstützt. Das Verfahren ermöglicht dem Bediener ein sogenanntes Master-Formular oder leeres Formular auf einem Bildschirm zu betrachten, das eingerahmte bzw, halb eingerahmte Bereiche aufweist, die auf Felder zeigen. Der Bediener kann dann durch Auswählen eines einzelnen Punktes innerhalb dieses eingerahmten bzw. halb eingerahmten Bereichs mittels einer Zeigereinrichtung auswählen und die den eingerahmten Bereich darstellenden Koordinaten werden automatisch mittels des einzigen vom Operator ausgewählten Punktes bestimmt.

Der Erfindung liegt die Aufgabe zugrunde, ein Verfahren und ein System zum Erfassen von Daten aus maschinell lesbaren Dokumenten zu schaffen, das sehr einfach und ohne Kenntnisse der Computer- und Softwaretechnik bedienbar ist.

Die Aufgabe wird durch ein Verfahren mit den Merkmalen des Anspruchs 1 und durch ein System mit den Merkmalen des Anspruchs 11 gelöst. Vorteilhafte Ausgestaltung der Erfindung sind in den jeweiligen Unteransprüchen angegeben.

Das erfindungsgemäße Verfahren zum Erfassen von Daten aus mehreren maschinell lesbaren Dokumenten umfasst folgende Schritte:
- Zuordnen zu einem zu bearbeitenden Dokument, das nachfolgend als Lesedokument bezeichnet wird, zumindest ein bereits bearbeitetes Dokument, das als Vorlage gespeichert ist und nachfolgend als Vorlagedokument bezeichnet wird, wobei in dem Vorlagedokument Felder für zu extrahierende Daten definiert sind,
- automatisches Extrahieren der in dem Lesedokument enthaltenen Daten aus den Bereichen, die den Feldern in dem Vorlagedokument entsprechen,
- sollte beim automatischen Extrahieren der Daten ein Fehler aufgetreten sein oder kein geeignetes Vorlagedokument zugeordnet worden sein, so wird das Lesedokument an einem Bildschirm dargestellt, und Mittel zum manuellen Eingeben von Feldern in das Lesedokument zur Verfügung gestellt, aus welchen die Daten extrahiert werden.

Bei dem erfindungsgemäßen Verfahren sind, falls ein Lesedokument nicht automatisch extrahiert werden kann, darin lediglich die Felder einzugeben, aus welchen die Daten erfasst werden sollen, ohne dass vom Benutzer weitere Eingaben verlangt werden, die Computer- und Softwarekenntnisse voraussetzen.

Dies wird dadurch ermöglicht, dass als Vorlagedokumente jeweils ein im Wesentlichen unverändertes Lesedokument gespeichert wird, dem lediglich Angaben, wie die Definitionen der Felder, hinzugefügt sind.

Die Erfindung unterscheidet sich gegenüber herkömmlichen Verfahren dadurch, dass beim Ermitteln der Ähnlichkeit der Lesedokumente mit einem Vorlagedokument nicht speziell abgeleitete Parameter, wie zum Beispiel Linienschlüssel oder dergleichen, verglichen werden, die speziell erstellt werden müssen, sondern die Vorlagedokumente die ursprünglichen Lesedokumente im wesentlichen unverändert enthalten, wobei lediglich zusätzliche Informationen hinzugefügt sind.

Die Erfindung wird nachfolgend näher anhand der Zeichnungen erläutert. In den Zeichnungen zeigen:
- Figur 1: die Grundstrukturen des erfindungsgemäßen Verfahrens in einem Flussdiagramm,
- Figur 2: einen detaillierten Ablauf des erfindungsgemäßen Verfahrens zum Extrahieren von Daten aus einem Lesedokument in einem Flussdiagramm,
- Figur 3: einen Abschnitt des erfindungsgemäßen Verfahrens zum automatischen Erstellen eines neuen Vorlagedokumentes,
- Figur 4: eine Kopie der Bildschirmoberfläche zum manuellen Eingeben eines Feldes,
- Figur 5: die Abbildung eines Lesedokumentes auf ein Vorlagedokument, und

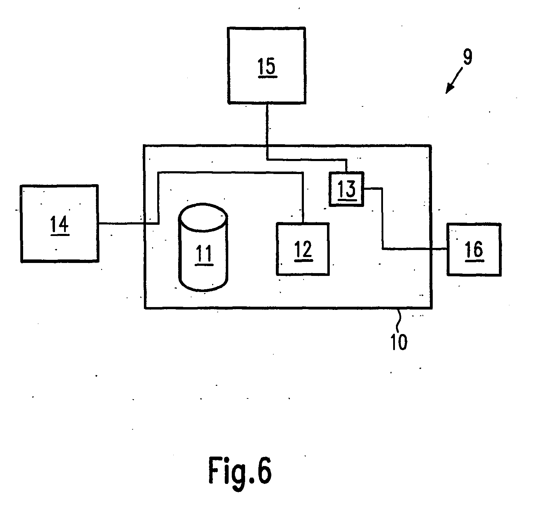

- Figur 6: schematisch ein System zum Ausführen des erfindungsgemäßen Verfahrens in einem Blockschaltbild

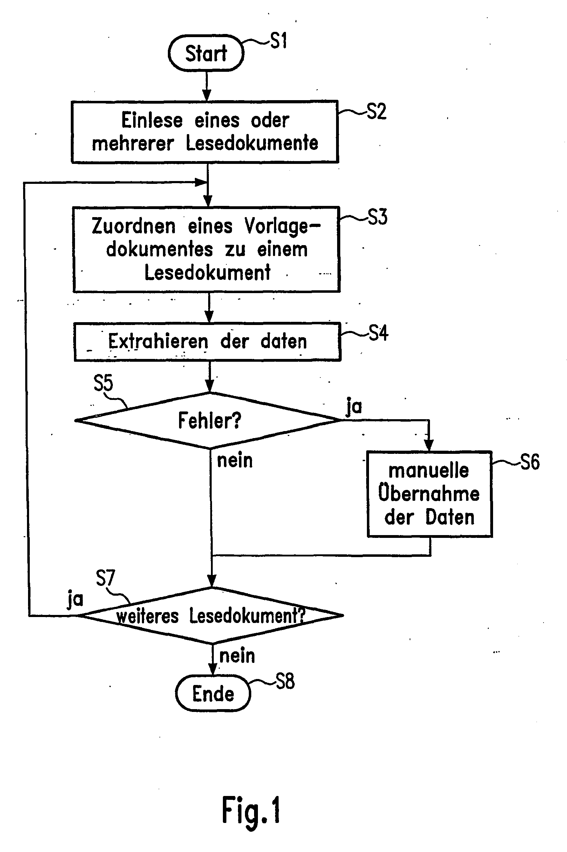

Die Grundstruktur des erfindungsgemäßen Verfahrens ist schematisch in dem in Figur 1 gezeigten Flussdiagramm dargestellt.

Das Verfahren beginnt mit dem Schritt S1. Im Schritt S2 werden eines oder mehrere maschinell lesbare Dokumente eingelesen. Das Einlesen der Dokumente kann zum Beispiel mittels eines Scanners erfolgen. Die Dokumente können jedoch auch bereits in maschinenlesbarer Form vorliegende Dokumente sein, wie zum Beispiel e-Mails, Text enthaltende Dateien oder in Datenbanken gespeicherte Dokumente. Ein maschinell lesbares Dokument ist jedes von einem Computer lesbare Dokument. Die Dokumente können jeweils in einer separaten Datei gespeichert sein. Es ist jedoch auch möglich, dass mehrere Dokumente in einer einzigen Datei zusammengefasst sind. Insbesondere können die Dokumente in einer Datenbank enthalten sein. Die Dokumente können als Grafikdatei gespeichert sein. Die Dokumente können auch als Textdatei vorliegen oder Kombinationen aus Grafik- und Textelementen enthalten. Enthalten die Dokumente Textabschnitte, die als Grafik gespeichert sind, so sind die Dokumente mit einem OCR-Verfahren im Schritt S2 in codierten Text umzusetzen. Derartige Verfahren sind hinlänglich bekannt und müssen nicht erläutert werden.

Bei einer bevorzugten Ausführungsform der Erfindung werden im Schritt S2 das bzw. die Lesedokumente auf Syntax und semantische Inhalte untersucht. Zum Beispiel können als syntaktische Inhalte Datumsangaben, Währungsbeträge, Leistungsbeträge oder andere reguläre Ausdrücke festgestellt werden. Als semantische Inhalte werden beispielsweise Bezeichnungen von Artikeln oder Dienstleistungen erkannt.

Das erfindungsgemäße Verfahren kann unter anderem zum Lesen von Rechnungen und automatischen Extrahieren der darin enthaltenen Daten verwendet werden, wobei die extrahierten Daten einer betriebswirtschaftlichen Software übergeben werden. Bei einer solchen Anwendung des erfindungsgemäßen Verfahrens ist es besonders zweckmäßig, beim Einlesen eines oder mehrere Dokumente, die als Lesedokumente bezeichnet werden, syntaktische Inhalte, wie Betragsfelder oder Datumsfelder und semantische Inhalte wie die Bezeichnung des Artikels bzw. Dienstleistung zu identifizieren.

Dann wird einem zu bearbeitendem Lesedokument ein Vorlagedokument zugeordnet (Schritt S3). Ein Vorlagedokument ist ein bereits früher bearbeitetes Lesedokument, in dem Felder enthalten sind, aus welchen Daten zu extrahieren sind.

Das Lesedokument und das Vorlagedokument besitzt einen ähnlichen Aufbau bzw. ein ähnliches Format, d.h., dass ähnliche Daten an den gleichen Stellen in den Dokumenten angeordnet sind. In der Regel sind die einander zugeordneten Lese- und Vorlagedokumente gleiche Formulare. Im Schritt S4 werden aus dem Lesedokument an den Stellen Daten extrahiert, an welchen korrespondierende Felder im Vorlagedokument angeordnet sind. Diese extrahierten Daten können zum Beispiel in eine Datenbank eingetragen werden und/oder von einer weiteren Software bearbeitet werden.

Im Schritt S5 wird geprüft, ob beim Extrahieren der Daten ein Fehler aufgetreten ist. Ein Fehler kann dadurch verursacht sein, dass kein Vorlagedokument zugeordnet werden konnte oder ein ungeeignetes Vorlagedokument dem Lesedokument zugeordnet worden ist. Ein ungeeignetes Vorlagedokument ist zum Beispiel ein Dokument, dessen Felder nicht mit den Stellen des Lesedokumentes übereinstimmt, an dem im Lesedokument Daten enthalten sind. Ein Fehler kann auch dadurch verursacht sein, dass in dem eingelesenen Lesedokument eine falsche Angabe enthalten ist, zum Beispiel an der Stelle, wo das Datum stehen soll, Buchstaben angeordnet sind. Ein solcher Fehler kann auch beim Einlesen des Lesedokumentes mittels eines OCR-Verfahrens entstehen, indem ein oder mehrere Zeichen falsch umgesetzt werden.

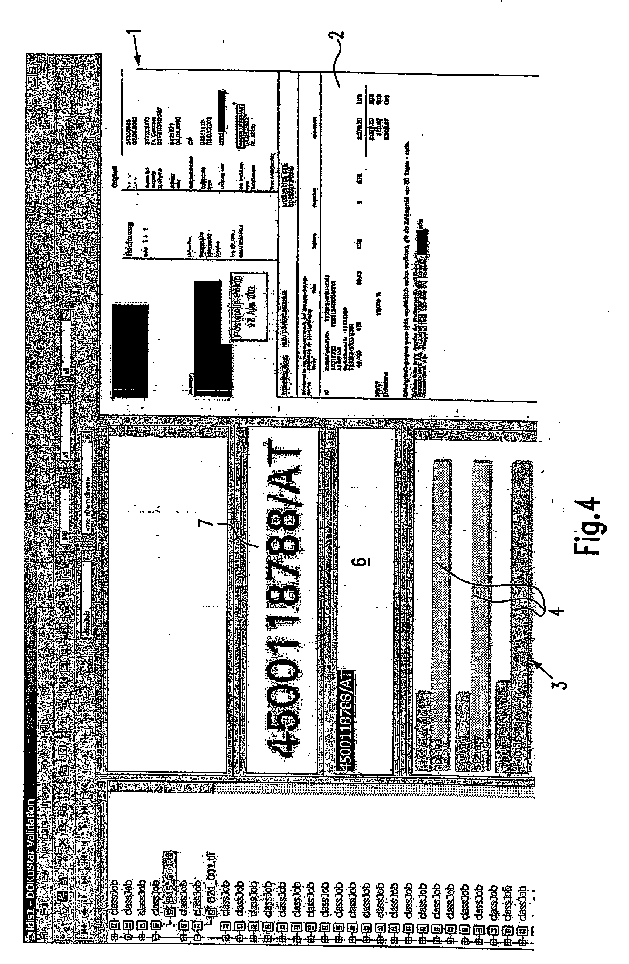

Falls im Schritt S5 ein Fehler festgestellt wird, wird das Lesedokument an einem Bildschirm dargestellt und Mittel zum manuellen Eingeben von Feldern in das Lesedokument zur Verfügung gestellt. Eine solche Bildschirmoberfläche ist in Figur 4 dargestellt. Im Fenster 1 am rechten Rand ist das Lesedokument 2. eine Rechnung, dargestellt. Im Fenster 3 in der Mitte unten sind eine Reihe von Dateneinheiten 4 aufgeführt, die aus dem Lesedokument extrahiert werden. Dies sind die Rechnungsnummer des Absenders ("InvoiceSender"), die Auftragsnummer ("AufNum") und die Auftragsrechnungsnummer ("InvoiceOrdernumber"). Die Auftragsnummer ist hierbei mit einer anderen Farbe als die übrigen Dateneinheiten unterlegt, das bedeutet, dass diese Dateneinheit nicht korrekt gelesen werden konnte. Der Benutzer markiert dann mit der Maus ein Feld 5 im Lesedokument 2, das die Auftragsnummer beinhaltet. Nach der Markierung eines Feldes wird dann der Feldinhalt gelesen, wobei dann in einem Fenster 6, das oberhalb des Fensters 3 der Dateneinheiten angeordnete ist, der decodierte Inhalt des Feldes dargestellt wird, der im vorliegenden Fall "4500118788/AT" ist und in dem darüber angeordneten Fenster 7 wird die nichtdecodierte grafische Darstellung des Feldinhaltes vergrößert angezeigt. Der Benutzer kann somit die Grafik des Feldes 5 lesen und mit dem decodierten Feldinhalt vergleichen. Ist dies korrekt, so ist die Auftragsnummer richtig decodiert worden und durch einen weiteren Klick mit der Maus auf die Dateneinheit 4 im Fenster 3 wird dieser Wert übernommen. In dem vorliegenden Ausführungsbeispiel wird der Wert in eine Datenbank einer betriebswirtschaftlichen Software eingetragen. Sind alle Feldinhalte extrahiert worden, wird mit einem unten näher erläuterten Abschnitt des Verfahrens ermittelt, ob anhand der von dem Benutzer markierten Felder ein neues Vorlagedokument erstellt wird, was dann gegebenenfalls automatisch durchgeführt wird. Die beschriebenen Benutzeraktionen können mit der Maus oder auch vollständig über die Tastatur gesteuert werden.

Nach der manuellen Übernahme der Daten gemäß dem Schritt S6 oder nachdem im Schritt S5 festgestellt worden ist, dass beim Extrahieren der Daten kein Fehler aufgetreten ist, wird im Schritt S7 geprüft, ob ein weiteres zu bearbeitendes Lesedokument vorliegt.. Falls dies der Fall ist, geht der Verfahrensablauf wieder auf den Schritt S3 über. Ansonsten endet das Verfahren mit dem Schritt S8.

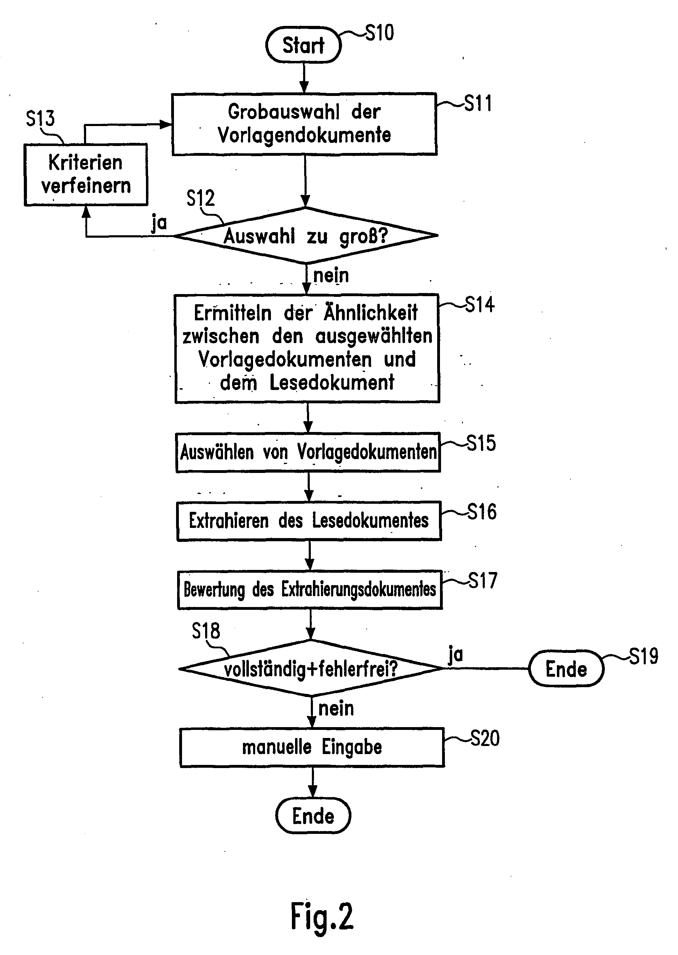

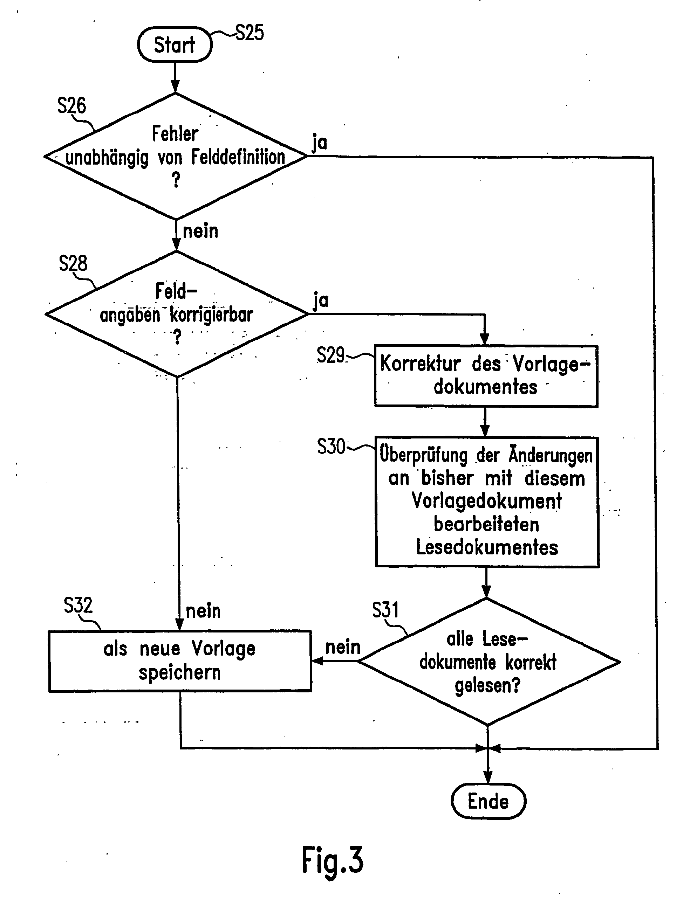

Nachfolgend wird der Abschnitt des obigen Verfahrens mit den Schritten S3 bis S6 anhand des in den Figuren 2 und 3 dargestellten bevorzugten Ausführungsbeispieles näher erläutert. Bei diesem Ausführungsbeispiel sind die Schritte des Zuordnens eines Vorlagendokumentes zu einem Lesedokument und das Extrahieren der Daten ineinander verzahnt, wie es aus der folgenden Beschreibung hervorgeht.

Dieser Verfahrensabschnitt beginnt mit dem Schritt S10. Im Schritt S11 wird eine Grobauswahl der Vorlagedokumente vorgenommen. Hierzu wird zum Beispiel das eingangs erläuterte Verfahren der invertierten Dateien (siehe Kapitel 8.2 Inverted Files in Modern Information Retrieval, ISBN 0-201-39829-X) verwendet. Dementsprechend wird zunächst ein Wörterbuch von nach einem vorbestimmten Kriterium ausgewählten Wörtern aller Vorlagedokumente erstellt und den einzelnen Wörtern werden die Zahlen zugeordnet, die die Vorlagedokumente bezeichnen, in denen das Wort enthalten ist. Nach einem vorbestimmten Kriterium wird das Lesedokument mit den Vorlagedokumenten verglichen. Dieses Kriterium kann zum Beispiel aus den fünf größten Wörtern des Lesedokumentes bestehen, die mit den Wörtern der Vorlagedokumente verglichen werden. Es werden dann die Vorlagedokumente ausgewählt, die auch diese fünf größten Wörter des Lesedokumentes enthalten. Die Verwendung der größten Wörter beruht auf der Erkenntnis, dass große Wörter einen hohen Informationsgehalt besitzen und oftmals ein eindeutiges Erkennungszeichen ergeben. Anstelle der größten Wörter können zum Beispiel auch die fünf Wörter verwendet werden, die zu Beginn des Textes des Lesedokumentes stehen. Bei Formularen sind die fünf ersten Wörter in der Regel im Briefkopf enthalten, wodurch die fünf ersten Wörter oftmals für einen bestimmten Absender sehr spezifisch sind.

Mit dieser Grobauswahl wird die Anzahl der Vorlagedokumente, die in der Regel einige Hunderttausend umfasst, auf einige wenige tausend oder einige hundert Dokumente reduziert.

Im Schritt S12 wird geprüft, ob die Anzahl der mit der Grobauswahl ermittelten Dokumente noch zu groß ist. Überschreitet sie einen Schwellwert, der zum Beispiel im Bereich von 1000 bis 10000 liegt, so geht der Verfahrensablauf auf den Schritt S13 über, in dem die Auswahlkriterien verfeinert werden. Eine solche Verfeinerung der Auswahlkriterien kann zum Beispiel durch Erhöhen der Anzahl der zu vergleichenden Worte oder durch weitere Kriterien erfolgen, die beim Vergleich zwischen dem Lesedokument und den verbliebenen Vorlagedokumenten durchgeführt werden. Diese Grobauswahl wird somit mit den verfeinerten Auswahlkriterien erneut durchgeführt (Schritt S11), danach wird wiederum geprüft, ob die Anzahl der ausgewählten Vorlagedokumente zu groß ist. Ist dies nicht der Fall, geht der Verfahrensablauf auf den Schritt S14 über.

Im Schritt S14 werden die in der Grobauswahl selektierten Vorlagedokumente mit dem Lesedokument verglichen und zu jedem Vorlagedokument wird ein die Übereinstimmung der beiden Dokumente beschreibendes Kostenmaß berechnet. Dieses Kostenmaß wird im folgenden als Ähnlichkeit bezeichnet.

Dieses Kostenmaß wird zum Beispiel mit einer Kostenfunktion berechnet, wie sie im Kapitel 8.6.1 String Matching Allowing Errors in Modern Information Retrieval (ISBN 0-201-39829-X) beschrieben ist. Je geringer dieses Kostenmaß ist, desto größer ist die Ähnlichkeit. Bei dem vorliegenden Verfahren werden mit der Kostenfunktion Wörter beziehungsweise durch Leerzeichen getrennte Textzeilenstücke oder Folgen von Wörtern der zu vergleichenden Dokumente verglichen und für je zwei Wörter wird ein Kostenwert berechnet. Mittels des Viterbi-Algorythmus wird eine Abbildung der beiden Dokumente zueinander ermittelt, welche die geringsten Gesamtkosten aufweisen. Die Gesamtkosten stellen das Kostenmaß für diese beiden Dokumente dar. Die ermittelte Abbildung, die die Abbildung der Felder des Vorlagedokumentes auf korrespondierende Positionen des Lesedokumentes umfasst, wird bei einer unten näher erläuterten Extraktion verwendet, falls dieses Vorlagedokument zur Extraktion ausgewählt werden sollte. Bei zwei identischen Dokumenten beträgt das Kostenmaß Null. Das Kostenmaß ist umgekehrt proportional zur Ähnlichkeit der Dokumente.

Im Schritt S15 werden entsprechend der ermittelten Ähnlichkeiten Vorlagedokumente ausgewählt. Bei diesem Auswahlverfahren werden entweder Vorlagedokumente ausgewählt, die einen bestimmten Ähnlichkeitswert überschreiten, d.h., das Kostenmaß ist kleiner als ein vorbestimmter Wert oder es werden eine vorbestimmte Anzahl ähnlichster Vorlagedokumente ausgewählt. Diese Anzahl kann zum Beispiel im Bereich von 10 bis 100 oder sogar bis 1000 betragen.

Im Schritt S16 wird das Lesedokument gemäß den ausgewählten Vorlagedokumenten extrahiert. Ist die Anzahl der Vorlagedokumente noch sehr groß, d.h. zum Beispiel größer als 50 oder größer als 100, dann kann es zweckmäßig sein, nicht alle Felder, sondern lediglich einen Teil davon zu extrahieren. Vorzugsweise werden die Felder extrahiert, die erfahrungsgemäß bei einer korrekten Zuordnung eines Vorlagedokumentes zu einem Lesedokument eine fehlerfreie Extraktion der Daten erlauben. Dies wird unten noch näher ausgeführt.

Danach werden im Schritt S17 die Extraktionsergebnisse bewertet. Die Bewertung erfolgt nach dem oben beschriebenen String Matching-Verfahren, wobei die aus dem Lesedokument gelesenen Daten sowie deren Umgebung mit den in den korrespondierenden Feldern und Umgebung der Vorlagedokumente entstehenden Daten verglichen und das Kostenmaß berechnet wird. Felder gelten insbesondere dann als gut(fehlerfrei) extrahiert, wenn die Umgebung auf dem Lesedokument und dem Vorlagedokument sehr gut übereinstimmt. Wenn-das Feld auf dem Lesedokument und dem Vorlagedokument dem gleichen Konzept (Syntax, Semantik) zugeordnet-werden kann, wird es zusätzlich als gut abbildbar beurteilt. Falls im Schritt S16 nicht alle Felder extrahiert worden sind, werden nun alle Felder gemäß einiger weniger Vorlagedokumente extrahiert und das Extraktionsergebnis entsprechend bewertet. Das hierbei ermittelte beste Extraktionsergebnis wird der Prüfung im Schritt S18 zu Grunde gelegt. Sollten im Schritt S16 alle Felder extrahiert worden sein, wird das im Schritt S17 als bestes Extraktionsergebnis bewertete Extraktionsergebnis für die Prüfung im Schritt S18 zu Grunde gelegt.

Im Schritt S18 wird geprüft, ob alle zu lesenden Dateneinheiten gelesen worden sind, d.h., ob die Extraktion vollständig durchgeführt worden ist, und ob die Extraktion fehlerfrei ist. Wenn dies der Fall ist, wird dieser Verfahrensabschnitt mit dem Schritt S19 beendet, da alle Daten aus dem Lesedokument vollständig und fehlerfrei extrahiert worden sind.

Ansonsten geht der Verfahrensablauf auf den Schritt S20 über, bei welchen manuell Felder in das Lesedokument eingegeben werden, um die entsprechenden Daten aus dem Lesedokument zu lesen. Der Schritt S20 entspricht dem oben erläuterten Schritt S6. Danach wird das Verfahren im Schritt S21 beendet.

Bei den oben erläuterten Schritt S6 und S20 kann es sein, ohne dass der Benutzer hiervon Kenntnis erlangt, automatisch ein neues Vorlagedokument erstellt und abgespeichert wird. Dies wird mit dem in Figur 3 gezeigten Verfahrensabschnitt ausgeführt, der bei Beendigung der manuellen Eingabe der Datenfelder automatisch aufgerufen wird.

Dieser Verfahrensabschnitt beginnt mit dem Schritt S25. Im Schritt S26 wird geprüft, ob der Fehler unabhängig von den in dem Vorlagedokument enthaltenen Feldpositionsdefinitionen ist. Dies sind insbesondere alle Fehler, die durch Daten verursacht werden, die zwar exakt an der Stelle des definierten Feldes angeordnet sind, jedoch nicht korrekt sind, wie zum Beispiel Buchstaben in Datumsangaben oder in Beträgen o.dgl. Dies sind also alles Fehler, die aus zwar korrekt positionierten Daten resultieren, deren Inhalt jedoch nicht korrekt ist. Wenn festgestellt wird, dass der Fehler unabhängig von der Feldpositionsdefinition ist, bedeutet dies, dass die Ursache hierfür im ursprünglichen Lesedokument liegt und nicht im Vorlagedokument. Somit ist weder eine Änderung noch Ergänzung der Vorlagedokumente zweckmäßig, womit der Verfahrensablauf auf den Schritt S27 übergeht und beendet wird.

Wird andererseits im Schritt S26 festgestellt, dass der Fehler nicht unabhängig von den Feldpositionsdefinitionen in den Vorlagedateien ist, so wird auf den Schritt S28 übergegangen. Ein solcher Fehler liegt zum Beispiel dann vor, wenn das korrespondierende Feld des Vorlagedokumentes zu den zu lesenden Daten im Lesedokument in der Position abweicht, wodurch die Daten entweder unvollständig oder nicht extrahiert werden. Ein ähnlicher Fehler tritt auf, wenn das Feld zu klein definiert ist oder wenn das Feld zu groß ist und weitere Daten enthält, die eigentlich nicht gelesen werden sollten.

In einem solchen Fall hat der Benutzer die zu lesenden Daten im Schritt S6 bzw. S20 durch ein Feld markiert. Im Schritt S28 wird geprüft, ob diese neuen, vom Benutzer eingegebenen Feldangaben zur Korrektur des bisher verwendeten Vorlagedokumentes geeignet sind. Ist dies der Fall, wird im Schritt S29 das Vorlagedokument entsprechend korrigiert und im Schritt S30 wird das derart veränderte Vorlagedokument überprüft, indem alle bisher mit diesem Vorlagedokument bearbeiteten und extrahierten Lesedokumente extrahiert werden.

Der Begriff Korrektur bedeutet hier nicht, dass das bisherige Vorlagedokumente nicht korrekt gewesen sein muss, sondern, dass das bisher verwendete Vorlagedokument an sich korrekt sein kann, jedoch durch eine Ergänzung der Feldangaben es für die Abbildung seiner Felder für weitere Lesedokumente geeignet sein kann. Die Korrektur ist somit eine Verbesserung des Vorlagedokumentes aber nicht immer notwendigerweise eine Beseitigung eines Fehlers.

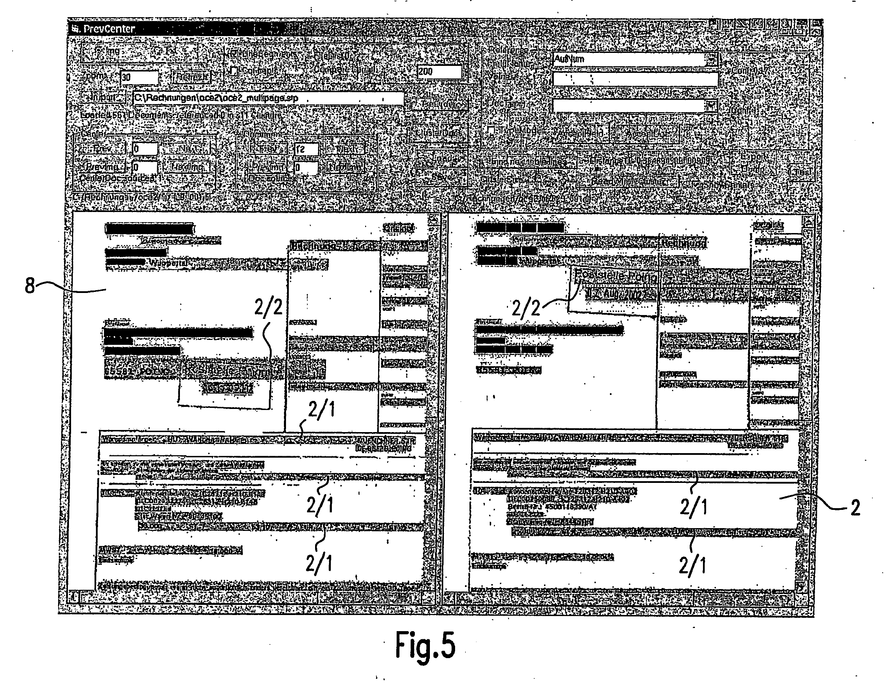

Bei einer alternativen Ausführungsform der Erfindung wird bei der Korrektur eines Vorlagedokumentes dieses Vorlagedokument am Bildschirm dargestellt und der Benutzer kann die Fehler des Vorlagedokumentes manuell verändern. Dies ist insbesondere vorteilhaft, wenn das Vorlagedokument und das Lesedokument zugleich am Bildschirm dargestellt werden (Fig. 5). Im Vorlagedokument 8 und im Lesedokument 2 sind die aufeinander abgebildeten Felder markiert, wobei die gut abbildbaren Felder 2/1 mit einer helleren Farbe markiert sind, als die weniger gut abbildbaren Felder 2/2. Zum Beispiel sind die Eingangsstempel der Dokumente 2, 8 jeweils in einem Feld erfasst. Da die Eingangsstempel an unterschiedlicher stelle angeordnet sind, sind sie nicht aufeinander abbildbar und stören die Abbildung der eigentlich in diesen Feldern enthaltenden Daten. Der Benutzer kann zum Beispiel diese Felder so verändern, dass die Eingangsstempel nicht mehr Bestandteil der Felder sind.

Im Schritt S31 wird geprüft, ob alle diese Dokumente mit dem korrigierten Vorlagedokument korrekt gelesen werden konnten. Ist dies der Fall, so bedeutet dies, dass die vorgenommene Korrektur des Vorlagedokumentes auch zum Lesen der bisher bearbeiteten Lesedokumente geeignet ist und übernommen wird.

Bei der Korrektur eines Vorlagedokumentes im Schritt S29 werden insbesondere über mehrere Lesedokumente hinweg konstante Umgebungen von Feldern eingearbeitet. Dies heißt, dass, falls in mehreren Lesedokumenten die Umgebung bestimmter Felder identisch ist, wird dies im Vorlagedokument vermerkt und diese Information erhält eine besonders hohe Bedeutung bei der Beurteilung der Ähnlichkeit der Inhalte von Feldern.

Falls im Schritt S31 festgestellt wird, dass nicht alle Lesedokumente korrekt gelesen worden sind oder dass im Schritt S28 festgestellt wird, dass das Vorlagedokument mit den manuell eingegebenen Feldpositionsdefinitionen nicht korrigierbar ist, geht der Verfahrensablauf auf den Schritt S32 über. Im Schritt S32 wird das Lesedokument mit den Feldpositionsdefinitionen als weiteres Vorlagedokument gespeichert. In diesem neuen Vorlagedokument sind die manuell eingegebenen Feldpositionsdefinitionen und die Definitionen des Vorlagedokumentes enthalten, mit dem die Daten dieser Lesedatei extrahiert worden sind.

Hierdurch wurde automatisch ein neues Vorlagedokument erstellt, das bei der Auswertung der zukünftig zu bearbeitenden Lesedokumente berücksichtigt wird.

Die Erfindung wurde oben anhand eines Beispieles erläutert. Im Rahmen der Erfindung sind jedoch Abwandlungen gegenüber diesem Beispiel möglich. So können die Schritt S12 und S13 weggelassen werden und die Grobauswahl wird nur einmal mit einem Satz vorbestimmter Kriterien durchgeführt. In den Schritten S14 und S17 können die Kriterien unterschiedlich gesetzt sein. Bei dem Schritt S16 können bereits im ersten Durchgang alle Felder gelesen werden. Bei dem Ausführungsbeispiel gemäß Figur 2 erfolgt die Zuordnung eines Vorlagendokumentes zu einem Lesedokument durch die Bewertung der Extraktion der Ergebnisse nach dem in der Regel mehrmaligen Extrahieren-des Lesedokumentes. Das Extrahieren der Daten wird somit bei der Zuordnung eingesetzt. Es ist jedoch auch möglich, das Verfahren so zu gestalten, dass die Zuordnung des Vorlagedokumentes zu einem Lesedokument unabhängig von der Extraktion der Daten erfolgt.

Bei einer bevorzugten Ausführungsform der Erfindung werden die in dem Schritt S17 ermittelten Ähnlichkeiten abgespeichert und statistisch ausgewertet. Jedem Feld eines Vorlagedokumentes wird anhand der statistischen Auswertung ein Vertraulichkeitswert zugeordnet, der beschreibt, wie gut zu diesem Feld korrespondierende Daten der Lesedokumente gelesen werden konnten. Ist der Vertraulichkeitswert hoch, so bedeutet dies, dass die zu diesem Feld korrespondierenden Daten meistens mit hoher Qualität und Zuverlässigkeit gelesen werden konnten. Vorzugsweise werden bei der Bewertung der Extraktionsergebnisse im Schritt S17 die Felder stärker bewertet, deren Vertraulichkeitswert höher ist. Hierdurch wird bei der Auswahl bzw. Zuordnung eines Vorlagedokumentes gut abbildbare Felder stärker als weniger gut abbildbare Felder berücksichtigt. Dies steigert die Qualität des Auswahlverfahrens.

Weiterhin kann ein Modul zur Verfügung gestellt werden, mit welchem ein Administrator anhand der Statistik ermitteln kann, welche Vorlagedokumente selten zur Extraktion von Lesedokumenten herangezogen werden oder oft fehlerbehaftet sind. Der Administrator kann gegebenenfalls entsprechende Vorlagedokumente löschen bzw. bearbeiten. Dies ist zum Beispiel zweckmäßig, wenn ein Vorlagedokument erstellt wird, das auf einem gescannten Dokument beruht, das sehr unklar und damit kaum leserlich eingescannt worden ist. Ein derartiges Vorlagedokument kann für die weitere Nutzung ungeeignet sein.

Im Rahmen der Erfindung ist es auch möglich, dass zum Beispiel bei der Bewertung der Extraktionsergebnisse gleichzeitig die Umgebung der Felder der Lesedokumente untersucht wird und mit der Umgebung der Felder des.Vorlagedokumentes verglichen wird und, falls hier eine Identität besteht, wird.dies als zusätzliche Angabe zu dem Feld im Vorlagedokument gespeichert. Felder, deren Umgebung mit vielen Lesedokumenten identisch sind, werden dann bei den oben beschriebenen Auswahlverfahren der Vorlagedokumente stärker berücksichtigt als Felder deren Umgebung sich regelmäßig ändert.

Fig-. 6 zeigt schematisch ein System zum Ausführen des erfindungsgemäßen Verfahrens. Dieses System 9 weist einen Computer 10 mit einer Speichereinrichtung 11, mit einer zentralen Prozessoreinrichtung (CPU) 12 und einer Interfaceeinrichtung 13 auf. Am Computer 10 sind ein Scanner 14, ein Bildschirm 15 und eine Eingabeeinrichtung 16 angeschlossen. Die Eingabeeinrichtung 16 umfasst eine Tastatur und/oder eine Maus.

In der Speichereinrichtung 11 ist ein Softwareprodukt zum Ausführen des erfindungsgemäßen Verfahrens gespeichert, das an der CPU 12 ausgeführt wird. Mit dem Scanner 14 werden Dokumente erfasst und in eine elektronische Datei umgewandelt. Diese elektronischen Dateien werden vom Computer 10 eingelesen und eventuell mittels eines OCR-Verfahrens und/oder eines Verfahrens zum Erkennen spezieller Syntax oder Semantik in der Datei vorverarbeitet. Danach werden die in den Dateien enthaltenen Dokumente entsprechend dem oben beschriebenen Verfahren mit dem System 9 bearbeitet. An der Eingabeeinrichtung 16 können die entsprechenden Eingaben vorgenommen werden. Diese Eingaben sind lediglich auf die Definition eines Feldes und eventuell auf die Verknüpfung mit einer Dateneinheit beschränkt, die dann von einer Software, zum Beispiel einer betriebswirtschaftliche Software, vorgenommen wird. Diese Eingaben können sowohl am Lesedokument als auch am Vorlagedokument ausgeführt werden, wie es oben beschrieben ist. Dies ist so einfach, dass sie von jeder Person ohne speziellem Software- oder Computerwissen ausführbar sind.

Die Erfindung kann folgendermaßen zusammengefasst werden:

Die Erfindung betrifft ein Verfahren und ein System zum Erfassen von Daten aus mehreren maschinell-lesbaren Dokumenten. Beim erfindungsgemäßen Verfahren werden aus einem zu bearbeitenden Dokument, dem Lesedokument, Daten extrahiert, in dem sie an Positionen aufs dem Lesedokument ausgelesen werden, die durch in einem Vorlagedokument eingetragenen Felder bestimmt sind.

Tritt ein Fehler beim Auslesen der Lesedokumente auf, wird das Lesedokument an einem Bildschirm dargestellt und lediglich durch Markieren entsprechender Felder im Lesedokument können die Daten ausgelesen werden. Zum Bedienen des erfindungsgemäßen Systems sind keine weiteren Kenntnisse notwendig.

### Bezugszeichenliste

- 1: Fenster
- 2: Lesedokument
- 3: Fenster
- 4: Dateneinheit
- 5: Feld
- 6: Fenster
- 7: Fenster
- 8: Vorlagedokument
- 9: System
- 10: Computers
- 11: Speichereinrichtung
- 12: CPU
- 13: Interfaceeinrichtung
- 14: Scanners
- 15: Bildschirm
- 16: Eingabeeinrichtung

## Patentansprüche

1. Verfahren zum Erfassen von Daten aus in maschinell lesbarer Form vorliegenden Dokumenten, umfassend folgende Schritte:
- Zuordnen zu einem zu bearbeitenden Dokument, das nachfolgend als Lesedokument bezeichnet wird, zumindest ein bereits bearbeitetes Dokument, das als Vorlage gespeichert ist und nachfolgend als Vorlagedokument bezeichnet wird, wobei in dem Vorlagedokument Felder für zu extrahierende Daten definiert sind, wobei zunächst eine Grobauswahl (S11) der Vorlagedokumente vorgenommen wird, und dann die mit der Grobauswahl selektierten Vorlagedokumente mit den Lesedokumenten verglichen werden und ein die Übereinstimmung der jeweiligen Dokumente beschreibendes Kostenmaß berechnet wird (S14) und Vorlagedokumente entsprechend diesem Kostenmaß ausgewählt werden (S15),
- automatisches Extrahieren der in dem Lesedokument enthaltenen Daten aus den Bereichen, die den Feldern in dem Vorlagedokument entsprechen,
- Bewerten der mit den unterschiedlichen Vorlagedokumenten erhaltenen Extraktionsergebnisse dahingehend, ob die Felder als fehlerfrei extrahiert gelten (S17) und Prüfen (S18) des besten Extraktionsergebnisses, ob die Extraktion vollständig durchgeführt worden ist und ob die Extraktion fehlerfrei ist
- sollte beim automatischen Extrahieren der Daten ein Fehler aufgetreten sein oder kein geeignetes Vorlagedokument zugeordnet worden sein, so wird das Lesedokument an einem Bildschirm dargestellt, und Mittel zum manuellen Eingeben von Feldern in das Lesedokument zur Verfügung gestellt, wobei aus den manuell eingegebenen Feldern die Daten extrahiert werden, und nach dem manuellen Eingeben von Feldern in ein Lesedokument und bei einem nicht von den Feldpositionsdefinitionen des Vorlagedokuments unabhängigen Fehler das Lesedokument mit den Feldangaben als neues Vorlagedokument automatisch abgespeichert wird (S32) oder das bisherige Vorlagedokument entsprechend den neu eingegebenen Feldern automatisch korrigiert wird (S29).

2. Verfahren nach Anspruch 1,
**dadurch gekennzeichnet,**
**dass** nach dem manuellen Eingeben geprüft wird, ob die bisher im vorlagedokument enthaltenen Feldangaben gemäß den manuell eingegebenen Feldangaben korrigierbar sind (S28) und falls dies der Fall ist, eine entsprechende Korrektur des Vorlagedokumentes ausgeführt wird (S29), wobei dann die Änderungen am Vorlagedokument an Hand der bisher bearbeiteten Lesedokumente überprüft werden (S30) und, falls diese Überprüfung ergibt, dass mit den Änderungen nicht alle bisher bearbeiteten Lesedokumente korrekt gelesen werden können, die Korrekturen verworfen werden und das Lesedokument mit den manuell eingegebenen Feldangaben als neues Vorlagedokument gespeichert wird, wobei das Lesedokument mit den manuellen Feldangaben auch als Vorlagedokument gespeichert wird, wenn die des bisher verwendeten Vorlagedokumentes enthaltenen Feldangaben nicht automatisch korrigierbar sind (S28).

3. Verfahren nach Anspruch 1 oder 2,
**dadurch gekennzeichnet,**
**dass** beim manuellen Eingeben von Feldern diese mit einer Datenbank verknüpft werden, in der die extrahierten Daten gespeichert werden.

4. Verfahren nach Anspruch 3,
**dadurch gekennzeichnet,**
**dass** die Verknüpfung durch Eingeben eines Feldes in das Lesedokument und anschließendem Betätigen eines Elementes der Datenbank erfolgt.

5. Verfahren nach einem der Ansprüche 1 bis 4,
**dadurch gekennzeichnet,**
**dass** beim Zuordnen eines Vorlagedokumentes zu einem Lesedokument die Syntax und/oder Semantik einzelner Felder bewertet wird und in Abhängigkeit dieser Bewertung die Zuordnung ausgeführt wird.

6. Verfahren nach einem der Ansprüche 1, bis 5,
**dadurch gekennzeichnet,**
**dass** mehrere Lesedokumente dahingehend ausgewertet werden, ob die Umgebung zu einem Feld im Vorlagedokument konstant ist, und wenn dies der Fall ist, dies gespeichert und als weiteres Kriterium bei der Abbildung eines Feldes eines Vorlagedokumentes auf ein Lesedokument berücksichtigt wird.

7. Verfahren nach einem der Ansprüche 1 bis 6,
**dadurch gekennzeichnet,**
**dass** beim Zuordnen eines Vorlagedokumentes zu einem Lesedokument eine statistische Auswertung ausgeführt wird, die jedem Feld eines Vorlagedokumentes einen Vertraulichkeitswert zuordnet, der beschreibt, wie gut zu diesem Feld korrespondierende Daten der Lesedokumente gelesen werden konnten, wobei bei der Bewertung der zuordbarkeit eines Vorlagedokumentes zu einem Lesedokument die Felder mit einem hohen Vertraulichkeitswert stärker als die Felder mit einem niedrigen Vertraulichkeitswert gewertet werden.

8. Verfahren nach einem der Ansprüche 1 bis 7,
**dadurch gekennzeichnet,**
**dass** nach dem manuellen Eingeben von Feldern das Vorlagedokument am Bildschirm dargestellt wird und Mittel zum manuellen Korrigieren von Feldern im Vorlagedokument zur Verfügung gestellt werden.

9. System zu Durchführen eines Verfahrens nach einem der Ansprüche 1 bis 8, umfassend eine Einrichtung
- zum Zuordnen zu einem zu bearbeitenden Dokument, das nachfolgend als Lesedokument bezeichnet wird, zumindest ein bereits bearbeitetes Dokument enthält, das als Vorlage gespeichert ist und nachfolgend als Vorlagedokument bezeichnet wird, wobei in dem Vorlagedokument Felder für die zu extrahierenden Daten definiert sind, und das Zuordnen mittels einer Kostenfunktion erfolgt, mit welcher die Ähnlichkeit zwischen dem Lesedokument und Vorlagedokumenten berechnet wird und das Vorlagedokument mit der besten Ähnlichkeit dem Lesedokumente zugeordnet wird, und
- automatisches Extrahieren der in dem Lesedokument enthaltenen Daten aus den Bereichen, die den Feldern in dem Vorlagedokument entsprechen.

10. System nach Anspruch 9,
**gekennzeichnet durch**
einen Computer, auf dem ein Softwareprodukt zum Ausführen des Verfahrens nach einem der Ansprüche 1 bis 10 gespeichert ist.

11. System nach Anspruch 9 oder 10,
**dadurch gekennzeichnet,**
**dass** das System einen Scanner zum Erfassen von Dokumenten aufweist.

## Claims

1. A method for the collection of data from documents present in machine-readable form, comprising the following steps:
- association of at least one already-processed document that is stored as a template and is subsequently referred to as a template document with a document to be processed that is subsequently referred to as a read document, fields for data to be extracted being defined in the template document, at first a rough selection (S11) of the template documents being made, and then the template documents selected with the rough selection being compared with the read documents and a cost measure being calculated (S14) with which the correspondence of the respective documents is described and template documents being selected (S15) in accordance with this cost measure,
- automatic extraction of the data contained in the read document from the regions that correspond to the fields in the template document,
- evaluation of the extraction results obtained with the different template documents as to whether the fields are considered as extracted error-free (S17) and checking (S18) of the best extraction result as to whether the extraction has been completely implemented and whether the extraction is error-free,
- should an error have occurred or no suitable template document have been associated given the automatic extraction of the data, the read document is shown on a screen and means are provided for manual input of fields in the read document, the data being extracted from the manually input fields, and after the manual input of fields in a read document and given an error that is not independent of the field position definitions of the template document, the read document being automatically stored with the field specifications as new template document (S32) or the former template document being automatically corrected in accordance with the newly input fields (S29).

2. The method according to claim 1,
**characterized in that**
after the manual input it is checked whether the previous field specifications contained in the template document can be corrected according to the manually input field specifications (S28) and if this is the case a corresponding correction of the template document is executed (S29), wherein the changes to the template document are then checked (S30) using the previously processed read documents, and, in the event that this check yields that not all previously-processed read documents can be correctly read with the changes, the corrections are discarded and the read document with the manually input field specifications is stored as a new template document, the read document with the manual field specifications also being stored as a template document when the contained field specifications of the previously used template document cannot be automatically corrected (S28).

3. The method according to claim 1 or 2,
**characterized in that**,
given the manual input of fields, these are linked with a databank in which the extracted data are stored.

4. The method according to claim 3,
**characterized in that**
the linking occurs via input of a field in the read document and subsequent actuation of an element of the databank.

5. The method according to one of the claims 1 to 4,
**characterized in that**
the syntax and/or semantics of individual fields is evaluated upon association of a template document with a read document, and the association is executed dependent on this evaluation.

6. The method according to one of the claims 1 to 5,
**characterized in that**
a plurality of read documents are evaluated as to whether the surroundings are constant with regard to a field in the template document, and when this is the case this is stored and considered as a further criterion in the mapping of a field of a template document to a read document.

7. The method according to one of the claims 1 to 6,
**characterized in that**
in the association of a template document with a read document, a statisticial evaluation is executed that associates a familiarity value with each field of a template document, which familiarity value describes how well data of the read documents corresponding to this field could be read, given the evaluation of the associability of a template document with a read document the fields with a high familiarity value are rated higher than the fields with a lower familiarity value.

8. The method according to one of the claims 1 to 7,
**characterized in that**
the template document is shown on the screen after the manual input of fields, and means are provided for manual correction of fields in the template document.

9. A system to implement a method according to one of the claims 1 to 8, comprising a device
- for association of at least one already-processed document that is stored as a template and is subsequently referred to as a template document with a document to be processed that is subsequently referred to as a read document, fields for data to be extracted being defined in the template document, and the association occurring by means of a cost function with which the similarity between the read document and the template documents is calculated and the template document with the best similarity being associated with the read document, and
- automatic extraction of the data contained in the read document from the regions that correspond to the fields in the template document.

10. The system according to claim 9,
**characterized by**
a computer on which is stored a software product for execution of the method according to one of the claims 1 to 8.

11. The system according to claim 9 or 10,
**characterized in that**
the system comprises a scanner for acquisition of documents.

## Revendications

1. Procédé pour la saisie de données issues de documents disponibles sous forme lisible par une machine, comprenant les étapes suivantes :
- association à un document à traiter appelé ci-après document à lire, d'au moins un document déjà traité, enregistré sous forme de modèle appelé ci-après modèle, des champs étant définis dans le modèle pour des données à extraire, une sélection grossière des modèles étant d'abord effectuée (S11) et les modèles sélectionnés grossièrement étant ensuite comparés aux documents à lire, et un coût étant calculé (S14) qui décrit la concordance des documents concernés, et des modèles étant sélectionnés (S15) conformément à ce coût ;
- extraction automatique des données contenues dans le document à lire dans les zones correspondant aux champs du modèle ;
- évaluation des résultats de l'extraction obtenus avec les différents modèles pour déterminer si les champs sont considérés comme extraits sans erreur (S17), et vérification (S18) du meilleur résultat de l'extraction pour déterminer si l'extraction est complète et si elle ne comporte pas d'erreur ;
- si, lors de l'extraction automatique des données, une erreur devait survenir, ou si aucun modèle approprié n'a été associé, alors le document à lire est représenté sur un écran, et des moyens pour la saisie manuelle de champs dans le document à lire sont mis en disposition, les données étant extraites des champs saisis manuellement, et le document à lire étant enregistré automatiquement avec les informations de champ en tant que nouveau modèle après la saisie manuelle de champs dans un document à lire et en cas d'erreur non indépendante des définitions de position des champs du modèle (S32), ou l'ancien modèle est corrigé automatiquement conformément aux champs nouvellement saisis (S29).

2. Procédé selon la revendication 1, **caractérisé en ce qu'**après la saisie manuelle, on vérifie si les informations de champ contenues jusqu'ici dans le modèle peuvent être corrigées selon les informations de champ saisies manuellement (S28), et si c'est le cas, une correction correspondante du modèle est effectuée (S29), les modifications apportées au modèle étant vérifiées à l'aide des documents à lire traités jusque là (S30), et, si cette vérification indique que les modifications ne permettent pas de lire correctement tous les documents à lire traités jusque là, les corrections sont refusées et le document à lire est enregistré, avec les informations de champ saisies manuellement, en tant que nouveau modèle, le document à lire étant enregistré, avec les informations de champ manuelles, également en tant que modèle lorsque les informations de champ contenues dans le modèle utilisé jusque là ne peuvent pas être corrigées automatiquement (S28) .

3. Procédé selon la revendication 1 ou la revendication 2, **caractérisé en ce que** lors de la saisie manuelle de champs, ceux-ci sont associés à une base de données dans laquelle sont enregistrées les données extraites.

4. Procédé selon la revendication 3, **caractérisé en ce que** pour procéder à cette association, on saisit un champ dans le document à lire, et on actionne ensuite un élément de la base de données.

5. Procédé selon l'une quelconque des revendications 1 à 4, **caractérisé en ce que** lors de l'association d'un modèle à un document à lire, on évalue la syntaxe et/ou la sémantique des différents champs, et on procède à l'association en fonction de cette évaluation.

6. Procédé selon l'une quelconque des revendications 1 à 5, **caractérisé en ce que** plusieurs documents à lire sont analysés afin de déterminer si l'environnement vers un champ dans le modèle est constant, et, si c'est le cas, ceci est enregistré et pris en compte dans un document à lire en tant qu'autre critère lors de la reproduction d'un champ d'un modèle.

7. Procédé selon l'une quelconque des revendications 1 à 6, **caractérisé en ce, que** lors de l'association d'un modèle à un document à lire, on procède à une analyse statistique qui associe à chaque champ d'un modèle une valeur de confidentialité qui décrit la qualité avec laquelle les données correspondant à ce champ des documents à lire ont pu être lues, les champs ayant une valeur de confidentialité élevée étant mieux évalués que les champs ayant une valeur de confidentialité faible lors de l'évaluation de l'associabilité d'un modèle à un document à lire.

8. Procédé selon l'une quelconque des revendications 1 à 7, **caractérisé en ce qu'**après la saisie manuelle des champs, le modèle s'affiche à l'écran et des moyens pour la correction manuelle de champs dans le modèle sont mis à disposition.

9. Système pour mettre en oeuvre un procédé selon l'une quelconque des revendications 1 à 8, comprenant un dispositif
- pour l'association à un document à traiter, appelé ci-après document à lire, d'au moins un document déjà traité, enregistré sous forme de modèle et appelé ci-après modèle, des champs étant définis dans le modèle pour les données à extraire, et l'association étant réalisée au moyen d'une fonction de coût avec laquelle la similitude entre le document à lire et des modèles est calculée, et le modèle ayant la plus grande similitude étant associé au document à lire, et
- pour extraire automatiquement les données contenues dans le document à lire les zones correspondant aux champs du modèle.

10. Système selon la revendication 9, **caractérisé par** un ordinateur dans lequel un logiciel pour la mise en oeuvre du procédé selon l'une quelconque des revendications 1 à 8 est enregistré.

11. Système selon la revendication 9 ou la revendication 10, **caractérisé en ce que** le système présente un scanner pour la saisie de documents.
